(19) Europäisches Patentamt
European Patent Office
Office européen des brevets

(11) **EP 1 403 751 B1**

(12) **FASCICULE DE BREVET EUROPEEN**

(45) Date de publication et mention
de la délivrance du brevet:
**14.05.2014 Bulletin 2014/20**

(51) Int Cl.:
***G05D 1/00*** *(2006.01)*

(21) Numéro de dépôt: **03291478.0**

(22) Date de dépôt: **18.06.2003**

(54) **Procédé et dispositif d'aide à la conduite d'un aéronef roulant sur le sol**

Fahrhilfeverfahren und -Vorrichtung eines Flugzeuges während seines Bodenlaufs

Device and method of driving assistance for an aircraft during the ground run thereof

(84) Etats contractants désignés:
**AT BE BG CH CY CZ DE DK EE ES FI FR GB GR
HU IE IT LI LU MC NL PT RO SE SI SK TR**

(30) Priorité: **10.07.2002 FR 0208672**

(43) Date de publication de la demande:
**31.03.2004 Bulletin 2004/14**

(73) Titulaire: **AIRBUS OPERATIONS (SAS)**
**31060 Toulouse (FR)**

(72) Inventeurs:
• **Villaume, Fabrice**
**31000 Toulouse (FR)**
• **Godard, Eric**
**31500 Toulouse (FR)**
• **Chabe, David**
**31400 Toulouse (FR)**

(74) Mandataire: **Hauer, Bernard**
**Gevers France**
**41, avenue de Friedland**
**75008 Paris (FR)**

(56) Documents cités:
**US-A- 5 103 224    US-A- 5 142 478**
**US-A- 5 353 022    US-A- 5 978 724**
**US-A- 6 133 857**

• **MIDDLETON D B ET AL: "EVALUATION OF A
TAKEOFF PERFORMANCE MONITORING
SYSTEM DISPLAY" JOURNAL OF GUIDANCE
AND CONTROL AND DYNAMICS, AIAA. NEW
YORK, US, vol. 12, no. 5, 1 septembre 1989
(1989-09-01), pages 640-646, XP000085783 ISSN:
0731-5090**

**Description**

La présente invention concerne un procédé et un dispositif d'aide à la conduite d'un aéronef, en particulier un avion de transport, roulant sur le sol lors d'une phase d'accélération, en vue d'un décollage.

Par le document GB-2 224 475, on connaît un dispositif permettant d'afficher une pluralité de distances d'arrêt d'un véhicule sur le pare-brise de ce dernier. Ces distances d'arrêt correspondent à des valeurs théoriques pour plusieurs vitesses prédéterminées (les plus utilisées). Ce dispositif a donc un rôle préventif, mais il ne permet pas d'aider le conducteur lors d'un freinage brusque à partir d'une vitesse de roulement particulière.

En outre, par le document US-4 638 437, on connaît un dispositif permettant d'afficher notamment la distance d'arrêt d'un aéronef, représentative d'un freinage maximal. Pour le calcul de la distance d'arrêt, ce dispositif tient compte de paramètres relatifs aux conditions environnementales (état de la piste, météo, ...). Ce dispositif connu ne permet pas d'aider le pilote dans la situation de freinage précitée. De plus, la prise en compte de conditions environnementales rend nécessaire de procéder à l'acquisition de paramètres liés aux infrastructures au sol, ce qui a pour inconvénient de rendre ce dispositif connu dépendant desdites infrastructures au sol.

La présente invention a pour objet de remédier à ces inconvénients. Elle concerne un procédé d'aide à la conduite d'un aéronef roulant sur le sol, lors d'une phase d'accélération.

À cet effet, selon l'invention, ledit procédé est remarquable en ce que l'on réalise, de façon répétitive, les opérations successives suivantes :

    a) on détermine la vitesse actuelle vO de l'aéronef et une valeur acc correspondant à une décélération que subit l'aéronef lors d'un freinage d'urgence ;
    b) on calcule :

- à l'aide de ces valeurs vO et acc, la distance df à parcourir au sol par l'aéronef pour s'arrêter lors de la phase d'accélération, en utilisant l'expression suivante :

$$df = \frac{vO^2}{2\,acc}$$

- et, à partir de ladite distance df et de la position actuelle de l'aéronef, la position d'arrêt dudit aéronef si le pilote réalise un freinage d'urgence; et

    c) on présente à un pilote de l'aéronef, à l'aide d'un afficheur tête haute agencé à proximité du pare-brise de l'aéronef :

- cette distance df ; et
- la position d'arrêt de l'aéronef, en affichant sur ledit afficheur tête haute un symbole qui correspond, dans le champ de vision du pilote, à ladite position d'arrêt sur la voie de roulement dudit aéronef et qui permet au pilote de savoir jusqu'à quel moment il peut interrompre un décollage sans risquer de dépasser l'extrémité de la voie de roulement.

Ainsi, le pilote est informé en permanence, lors d'une phase d'accélération, de la distance nécessaire pour arrêter l'aéronef. Ce mode de fonctionnement peut être particulièrement utile, car il permet au pilote de savoir lors de l'accélération en vue d'un décollage jusqu'à quel moment il peut interrompre cette phase de décollage et réaliser un freinage d'urgence sans risquer de dépasser l'extrémité de la piste.

Ce procédé est très avantageux car il utilise pour sa mise en oeuvre uniquement des paramètres liés à l'aéronef, ce qui le rend indépendant de tout dispositif d'acquisition de paramètres liés à l'environnement (état du sol, météo,...) et de tout modèle numérique de comportement de l'aéronef.

On remarquera que le document US-5 353 022 concerne un système de contrôle de décollage et d'atterrissage d'aéronef mettant en oeuvre un afficheur tête haute affichant, entre autres, un symbole représentatif de l'aéronef.

La présente invention concerne également un dispositif pour la mise en oeuvre du procédé précité.

Selon l'invention, ledit dispositif est remarquable en ce qu'il comporte :

- un premier moyen pour déterminer la vitesse actuelle vO de l'aéronef ;
- un second moyen pour déterminer une valeur acc correspondant à une décélération que subit l'aéronef lors d'un freinage d'urgence ;
- un moyen de calcul pour calculer :

    • à l'aide de ces valeurs vO et acc, la distance df à parcourir au sol par l'aéronef pour s'arrêter lors de la phase d'accélération, en utilisant l'expression suivante :

$$df = \frac{vO^2}{2\,acc}$$

    • et, à partir de ladite distance df et de la position actuelle de l'aéronef, la position d'arrêt dudit aéronef si le pilote réalise un freinage d'urgence; et

- un moyen de présentation pour présenter sur un afficheur tête haute agencé à proximité du pare-brise de l'aéronef :

- cette distance df ; et
- la position d'arrêt de l'aéronef, en affichant sur ledit afficheur tête haute un symbole qui correspond, dans le champ de vision du pilote, à ladite position d'arrêt sur la voie de roulement dudit aéronef et qui permet au pilote de savoir jusqu'à quel moment il peut interrompre un décollage sans risquer de dépasser l'extrémité de la voie de roulement.

De plus, avantageusement, ledit dispositif comporte également un moyen pour déterminer la position actuelle du véhicule.

En outre, de façon avantageuse :

- ledit premier moyen est une centrale inertielle dudit aéronef ; et/ou
- ledit second moyen est une centrale inertielle dudit aéronef.

Un aéronef conforme à la présente invention est remarquable en ce qu'il comporte un dispositif d'aide au pilotage, tel que celui spécifié ci-dessus.

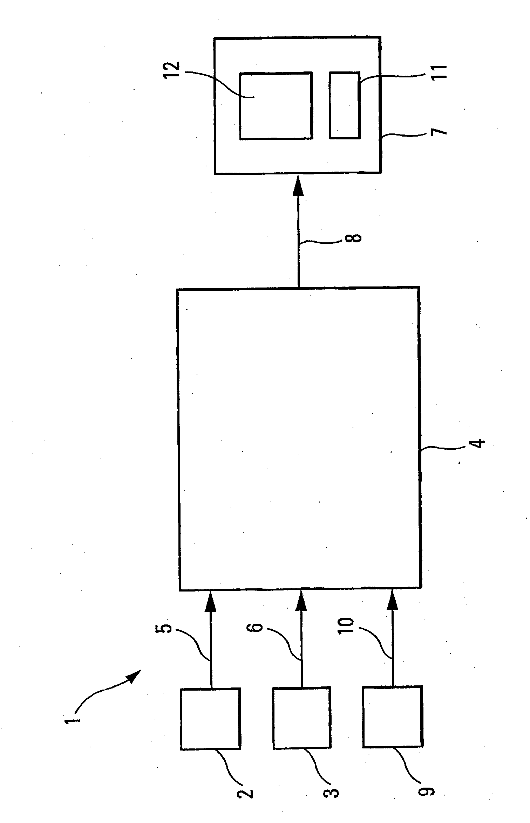

L'unique figure du dessin annexé fera bien comprendre comment l'invention peut être réalisée. Cette figure est le schéma synoptique d'un dispositif conforme à l'invention.

Le dispositif 1 conforme à l'invention et représenté sur la figure est destiné à aider le pilote d'un aéronef, tel qu'un avion de transport par exemple, qui roule sur une piste d'aéroport, de telle sorte que ledit pilote puisse évaluer de façon précise la situation effective dudit aéronef comme précisé ci-dessous.

Selon l'invention, ledit dispositif 1 comporte :

- un moyen 2 pour déterminer la vitesse de roulement actuelle (effective) vO de l'aéronef ;
- un moyen 3 pour déterminer une valeur acc correspondant à une décélération que subit l'aéronef lors d'un freinage d'urgence ;
- un moyen de calcul 4, usuel, qui est relié par des liaisons 5 et 6 respectivement auxdits moyens 2 et 3 et qui est destiné à calculer automatiquement une distance df qui doit être parcourue par l'aéronef pour atteindre l'arrêt ; et
- un moyen de présentation 7 qui est relié par une liaison 8 audit moyen de calcul 4 et qui est destiné à présenter automatiquement au pilote de l'aéronef au moins ladite distance df.

Selon l'invention, ledit moyen de calcul 4 calcule la distance df à partir de la relation ou expression simplifiée suivante :

$$ df = \frac{vO^2}{2\,acc} $$

Cette distance df représente la distance d'arrêt, c'est-à-dire la distance nécessaire à l'aéronef pour s'arrêter à partir de sa vitesse actuelle vO, en prenant en compte la valeur de décélération acc.

Le dispositif 1 est très avantageux, car il n'utilise pour sa mise en oeuvre que des paramètres liés à l'aéronef, ce qui le rend indépendant de tout dispositif d'acquisition de paramètres liés à l'environnement (état du sol, etc.) et de tout modèle numérique du comportement de l'aéronef.

Le moyen de calcul 4 calcule, de plus, la position d'arrêt xf, à partir de la distance df calculée préalablement et de la position actuelle xO de l'aéronef qui est reçue d'un moyen 9 par l'intermédiaire d'une liaison 10. À cet effet, ledit moyen de calcul 4 utilise la relation suivante :

$$ xf = xO + df $$

Ledit moyen 9 peut être un dispositif de positionnement géographique, en particulier un dispositif « GPS » différentiel. En outre, lesdits moyens 2 et 3 peuvent correspondre à une centrale inertielle de l'aéronef, en particulier dans le cas d'un avion de transport.

Par ailleurs, le moyen de présentation 7 permet de présenter au pilote la distance d'arrêt df.Il comporte un dispositif de visualisation 12 de type « afficheur tête haute » qui permet, par exemple, de présenter les informations sur le pare-brise de l'aéronef. De plus, selon l'invention, ledit afficheur 12 est formé pour afficher un symbole qui correspond, dans le champ de vision d'un pilote, à ladite position d'arrêt de l'aéronef sur sa voie de roulement (piste d'atterrissage, autoroute,...).

En phase d'accélération (en vue du décollage de l'aéronef), le moyen de calcul 4 détermine à partir des relations précitées, la distance df et le cas échéant la position d'arrêt xf, en utilisant la vitesse actuelle vO et, pour la valeur acc, une valeur de décélération prédéterminée, qui correspond à la décélération que subirait l'aéronef si le pilote décidait un freinage d'urgence. Dans ce cas, le pilote est informé en permanence de la distance nécessaire à l'arrêt de l'aéronef. Ce mode de fonctionnement peut être particulièrement utile : il permet en effet au pilote de savoir jusqu'à quel moment il peut interrompre un décollage sans risquer de dépasser l'extrémité de la piste lors d'un freinage subséquent.

## Revendications

1. Procédé d'aide à la conduite d'un aéronef roulant sur le sol en phase d'accélération en vue d'un décollage, procédé selon lequel on réalise, de façon répétitive, les opérations successives suivantes :

   a) on détermine la vitesse actuelle vO de l'aéronef et une valeur acc correspondant à une décélération que subit l'aéronef lors d'un freinage d'urgence ;
b) on calcule :

- à l'aide de ces valeurs vO et acc, la distance df à parcourir au sol par l'aéronef pour s'arrêter lors de la phase d'accélération, en utilisant l'expression suivante :

$$df = \frac{vO^2}{2\,acc}$$

- et, à partir de ladite distance df et de la position actuelle de l'aéronef, la position d'arrêt dudit aéronef si le pilote réalise un freinage d'urgence; et

c) on présente au pilote de l'aéronef, à l'aide d'un afficheur tête haute (12) agencé à proximité du pare-brise de l'aéronef :

- cette distance df ; et
- la position d'arrêt de l'aéronef, en affichant sur ledit afficheur tête haute (12) un symbole qui correspond, dans le champ de vision du pilote, à ladite position d'arrêt sur la voie de roulement dudit aéronef et qui permet au pilote de savoir jusqu'à quel moment il peut interrompre un décollage sans risquer de dépasser l'extrémité de la voie de roulement.

**2.** Dispositif d'aide à la conduite d'un aéronef roulant sur le sol en phase d'accélération en vue d'un décollage, ledit dispositif comportant :

- un premier moyen (2) pour déterminer la vitesse actuelle vO de l'aéronef ;
- un second moyen (3) pour déterminer une valeur acc correspondant à une décélération que subit l'aéronef lors d'un freinage d'urgence ;
- un moyen de calcul (4) pour calculer :

. à l'aide de ces valeurs vO et acc, la distance df à parcourir au sol par l'aéronef pour s'arrêter lors de la phase d'accélération, en utilisant l'expression suivante :

$$df = \frac{vO^2}{2\,acc}$$

. et, à partir de ladite distance df et de la position actuelle de l'aéronef, la position d'arrêt dudit aéronef si le pilote réalise un freinage d'urgence ; et

- un moyen de présentation (7) pour présenter sur un afficheur tête haute (12) agencé à proximité du pare-brise de l'aéronef :

. cette distance df ; et
. la position d'arrêt de l'aéronef, en affichant sur ledit afficheur tête haute (12) un symbole qui correspond, dans le champ de vision du pilote, à ladite position d'arrêt sur la voie de roulement dudit aéronef et qui permet au pilote de savoir jusqu'à quel moment il peut interrompre le décollage sans risquer de dépasser l'extrémité de la voie de roulement.

**3.** Dispositif selon la revendication 2, **caractérisé en ce que** ledit premier moyen (2) est une centrale inertielle de l'aéronef.

**4.** Dispositif selon l'une des revendications 2 et 3, **caractérisé en ce que** ledit second moyen (3) est une centrale inertielle de l'aéronef.

**5.** Aéronef, **caractérisé en ce qu'**il comporte un dispositif d'aide à la conduite (1), tel que celui spécifié sous l'une quelconque des revendications 2 à 4, pour aider un pilote de l'aéronef lors du roulement au sol dudit aéronef.

**Patentansprüche**

**1.** Verfahren zur Führungshilfe für ein Luftfahrzeug, das zum Zwecke eines Abflugs in einer Beschleunigungsphase auf dem Boden rollt, wobei gemäß dem Verfahren wiederholt die folgenden aufeinanderfolgenden Vorgänge ausgeführt werden:

a) es werden die aktuelle Geschwindigkeit vO des Luftfahrzeugs und ein Wert acc, welcher einer Verzögerung entspricht, die das Luftfahrzeug bei einer Notbremsung erfährt, bestimmt;
b) es werden berechnet:

- mithilfe dieser Werte vO und acc, die Strecke df, die von dem Luftfahrzeug auf dem Boden zurückgelegt werden muss, um während der Beschleunigungsphase anzuhalten, unter Verwendung des folgenden Ausdrucks:

$$df = \frac{vO^2}{2\,acc}$$

- und, ausgehend von dieser Strecke df und der aktuellen Position des Luftfahrzeugs, die Stoppposition des Luftfahrzeugs, falls der Pilot eine Notbremsung durchführt; und

c) dem Piloten des Luftfahrzeugs werden mithilfe eines in der Nähe der Windschutzscheibe des Luftfahrzeugs angeordneten Head-up-Displays (12) präsentiert:

- diese Strecke df; und
- die Stoppposition des Luftfahrzeugs, indem auf dem Head-up-Display (12) ein Symbol angezeigt wird, welches im Sichtfeld des Piloten der Stoppposition auf der Rollbahn des Luftfahrzeugs entspricht und welches dem Piloten ermöglicht zu wissen, bis zu welchem Moment er einen Start abbrechen kann, ohne zu riskieren, über das Ende der Rollbahn hinauszufahren.

**2.** Vorrichtung zur Führungshilfe für ein Luftfahrzeug, das zum Zwecke eines Abflugs in einer Beschleunigungsphase auf dem Boden rollt, wobei die Vorrichtung aufweist:

- ein erstes Mittel (2) zum Bestimmen der aktuellen Geschwindigkeit vO des Luftfahrzeugs;
- ein zweites Mittel (3) zum Bestimmen eines Wertes acc, welcher einer Verzögerung entspricht, die das Luftfahrzeug bei einer Notbremsung erfährt;
- ein Berechnungsmittel (4), um zu berechnen:

• mithilfe dieser Werte vO und acc, die Strecke df, die von dem Luftfahrzeug auf dem Boden zurückgelegt werden muss, um während der Beschleunigungsphase anzuhalten, unter Verwendung des folgenden Ausdrucks:

$$df = \frac{vO^2}{2\,acc}$$

• und, ausgehend von dieser Strecke df und der aktuellen Position des Luftfahrzeugs, die Stoppposition des Luftfahrzeugs, falls der Pilot eine Notbremsung durchführt; und

- ein Präsentationsmittel (7), um auf einem in der Nähe der Windschutzscheibe des Luftfahrzeugs angeordneten Head-up-Display (12) zu präsentieren:

• diese Strecke df; und

• die Stoppposition des Luftfahrzeugs, indem auf dem Head-up-Display (12) ein Symbol angezeigt wird, welches im Sichtfeld des Piloten der Stoppposition auf der Rollbahn des Luftfahrzeugs entspricht und welches dem Piloten ermöglicht zu wissen, bis zu welchem Moment er den Start abbrechen kann, ohne zu riskieren, über das Ende der Rollbahn hinauszufahren.

**3.** Vorrichtung nach Anspruch 2, **dadurch gekennzeichnet, dass** das erste Mittel (2) ein Trägheitsnavigationsleitsystem des Luftfahrzeugs ist.

**4.** Vorrichtung nach einem der Ansprüche 2 und 3, **dadurch gekennzeichnet, dass** das zweite Mittel (3) ein Trägheitsnavigationsleitsystem des Luftfahrzeugs ist.

**5.** Luftfahrzeug, **dadurch gekennzeichnet, dass** es eine Vorrichtung zur Führungshilfe (1) nach einem der Ansprüche 2 bis 4 aufweist, um den Piloten des Luftfahrzeugs beim Rollen des Luftfahrzeugs auf dem Boden zu unterstützen.

**Claims**

**1.** A process for aiding the driving of an aircraft running over the ground, during an acceleration phase with a view to a takeoff,
according to which process the following successive operations are carried out repetitively:

a) determining the current speed vO of the vehicle and a value acc corresponding to a deceleration undergone by the aircraft during emergency braking;
b) calculating :

- with the aid of these values vO and acc, the distance df to be traveled on the ground by the aircraft in order to stop during the acceleration phase, using the following expression:

$$df = \frac{vO^2}{2\,acc}$$

- and, from said distance df and from the current position of the aircraft, the stopping position of the aircraft if the aircraft carries out an emergency braking ; and

c) presenting to the driver of the aircraft, with the aid of a head-up display (12) which is arranged in proximity to the windscreen of the aircraft :

- this distance df ; and
- the stopping position of the aircraft, by displaying on said head-up display (12) a symbol that corresponds, in the field of vision of the pilot, to said stopping position on the running track of said aircraft and that allows the pilot to know to ascertain up to what moment he can interrupt a takeoff without any risk of overshooting the end of the runway.

2. A device for aiding the driving of a vehicle running over the ground, during an acceleration phase with a view to a takeoff,
said device comprising:

- a first means (2) for determining the current speed vO of the aircraft;
- a second means (3) for determining a value acc corresponding to a deceleration undergone by the aircraft during emergency braking;
- a calculation means (4) for calculating :

• with the aid of these values vO and acc, the distance df to be traveled on the ground by the aircraft in order to stop during the acceleration phase,using the following expression:

$$df = \frac{vO^2}{2\,acc}$$

• and, from said distance df and from the current position of the aircraft, the stopping position of the aircraft if the aircraft carries out an emergency braking ; and

- a means of presentation (7) for presenting on a head-up display (12) which is arranged in proximity to the windscreen of the aircraft :
- this distance df ; and
- the stopping position of the aircraft, by displaying on said head-up display (12) a symbol that corresponds, in the field of vision of the pilot, to said stopping position on the running track of said aircraft and that allows the pilot to know to ascertain up to what moment he can interrupt a takeoff without any risk of overshooting the end of the runway.

3. The device as claimed in claim 2,
**characterized in that** said first means (2) is an inertial platform of the vehicle.

4. The device as claimed in one of claims 2 and 3, **characterized in that** said second means (3) is an inertial platform of the vehicle.

5. Aircraft,
**characterized in that** it comprises a device for aiding driving (1), such as that specified under any one of claims 2 to 4, to aid a pilot of the aircraft during the running of said aircraft over the ground.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2224475 A
- US 4638437 A
- US 5353022 A